# EUROPEAN PATENT SPECIFICATION

(11) **EP 4 182 208 B1**
(45) Date of publication and mention of the grant of the patent: **29.04.2026**
(21) Application number: 21758801.1
(22) Date of filing: 16.07.2021
(51) Int. Cl.: B62J 27/00, B62J 45/41, B62J 50/21, B60R 21/0134

(54) **BLIND SPOT DETECTION SYSTEM**
SYSTEM ZUR ERKENNUNG VON TOTEN PUNKTEN
SYSTÈME DE DÉTECTION D'ANGLE MORT

(30) Priority: 18.07.2020 IN 202041030739
(43) Date of publication of application: 24.05.2023
(73) Proprietor: TVS Motor Company Limited, 600006 Chennai (IN)
(72) Inventor: KANIKA, Choudhary, Chennai, 600 006 (IN); BARATH, Mohan, Chennai, 600 006 (IN); ABHISHEK, Sharma, Chennai, 600 006 (IN); VELAGAPUDI, Sai Praveen, Chennai, 600 006 (IN); KARANAM, Venkata Manga Raju, Chennai, 600 006 (IN)
(74) Representative: Patentanwaltskanzlei Matschnig & Forsthuber OG
(86) International application number: PCT/IN2021/050688
(87) International publication number: WO 2022/018746

(56) References cited:
- WO-A1-2019/167220
- WO-A1-2019/186816
- WO-A1-2020/041188
- DE-A1- 102013 218 458
- DE-A1- 102013 222 598
- US-B2- 8 014 921
- US-B2- 9 457 753

## Description

### TECHNICAL FIELD

The present subject matter relates to a two-wheeled saddled vehicle. More particularly, the present subject matter relates to the blind spot detector in the two-wheeled saddled vehicle.

### BACKGROUND

Blind spot detectors have been developed in order to detect the presence of a vehicle or other object in rider's blind spot. The rider's blind spot is that portion of the vehicle in which an object will not normally be observed by the use of interior and exterior mirrors of the vehicle. By detecting the presence of the object in the rider's blind spot, the blind spot detector is useful in assisting the rider in performing a preventive maneuver evaluation of the environment surrounding the vehicle in anticipation of a lane change or the like. Known blind spot detectors include active and passive infrared detectors, optical detectors, radar-based detectors, and the like.

### BRIEF DESCRIPTION OF THE DRAWINGS

The detailed description is described with reference to the accompanying figures. The same numbers are used throughout the drawings to reference like features and components.
**Fig.1** is a right side view of a saddle type vehicle as per one embodiment of the present invention.
**Fig.2** is a block diagram for a blind spot detection system as per one embodiment of the present invention
**Fig.2a** is a top view of the vehicle with blind spot area as per one embodiment of the present invention.
**Fig. 2b** is a top view of the vehicle with blind spot sensors as per one embodiment of the present invention.
**Fig. 2c** is top view of the saddle type vehicle with blind spot sensors vision cone as per one embodiment of the present invention.
**Fig. 2d** is top view of the straddle type vehicle with blind spot sensors vision cone as per one not claimed embodiment of the present invention.
**Fig. 2e** is a predetermined range of sensors with respect to location area as per one embodiment of the present invention.
**Fig. 3** is a vehicle view as per one embodiment of the present invention.
**Fig. 3a** is a leaning vehicle view at predetermined angle as per one embodiment of the present invention.
**Fig. 3b** is conventional method view as per present invention.
**Fig. 3c** is a rear blind spot sensor view during vehicle leaning as per one embodiment of the present invention.
**Fig. 4** is a flowchart as per one embodiment of the present invention.

### DETAILED DESCRIPTION

Driving a vehicle in modern traffic conditions is a very complicated and dangerous task. The rider must be aware of all oncoming road hazards and traffic control devices including stopped cars, pedestrians crossing and red lights. Highway driving poses a dangerous task of watching oncoming road hazards while at the same time keeping a watch on vehicles coming from back or sides while travelling at high speeds. This significantly reduces the fraction of time available to sight the objects, analyses and process information for the human brain and take required decisions in a moment.. It is necessary to look both sideways and backwards before safely changing lanes on a highway. A failure to properly look both sideways and backwards before changing lanes can lead to serious high speed accidents. Such accidents often cause serious bodily harm or death.

A major cause of driving accidents is a rider's inability to recognize that another vehicle is proximate the rider's vehicle and that it is therefore unsafe to change lanes. The most difficult area for a rider to monitor is the rider's blind spot. Blind spots are attributable to, among other things, voids in coverage provided by mirrors that are positioned on the vehicle and by visual interference caused by objects (e.g. a part of the vehicle or an object being transported thereon or therein) which are located in the rider's line of vision.

Blind spots are traditionally monitored by the rider turning his head from the forward direction of travel of the vehicle to directly view the area in question. This is typically performed to determine whether another vehicle is proximate the rider's vehicle. In order for the rider to determine whether it is safe to change lanes, the rider must determine not only if a vehicle is present in the blind spot, but the size of the vehicle and its relative speed. This can only be accomplished if the rider observes the blind spot, and the vehicle that is in the blind spot, for a period of time (typically a few milliseconds). By turning his head from the forward direction of travel and observing the blind spot, the rider is reducing the chance of getting into an accident with a vehicle that is next to the rider's vehicle when changing lanes. However, since the rider is not continually observing roadway that is in front of the vehicle, the likelihood of the rider's vehicle being involved in a frontal collision increases.

In such cases, rearview mirrors located both inside the windshield, on the sides of vehicles so far have been the only widely accepted means for detecting vehicles on the sides or behind the rider's vehicle in the case of four wheeler. In case of two wheeler rear view mirrors are typically located on handle bar assembly for detecting vehicles on the side or behind the rider's vehicle. However, comparing blind spot area in four wheeler and in two wheeled vehicle, two wheeled vehicle has more blind spot area. Also, two wheeler riders are more prone to accident as compared to the four wheeler rider. All such rear view mirrors known to the applicant leave at least one blind spot where the rider cannot detect a nearby vehicle. These blind spots generally exist for example, right next to the rear fenders of a car or next to the rear wheels of a truck or on both sides of the two wheeled vehicles. Sometimes an entire car or two wheeled can be driving right alongside the rider's vehicle totally undetectable by the rider even after checking his rear view mirrors.

Further, most of the causes of blind spot in the two wheeled include, predominant sight of the forward vision which is an area the rider can see while riding the vehicle. The forward region comprises of sight zone and a peripheral zone. due to use of helmet, vision of peripheral zone that is maximum visual field zone is reduced by small values on both the sides of the vehicle. This reduction varies from helmet to helmet and is mainly dependent on the helmet design. This in turn increases the blind zone in the saddle type vehicle e.g. a two-wheeled vehicle. As the forward vision is very limited in the two-wheeled vehicle and hence a system to eliminate various blind spots is needed.

Therefore, from the above mentioned paragraphs it is quite clear that the blind spot in the vehicle has been a threat to the life of the riders of the vehicle. The blind spot in the vehicle specially creates problem for the riders riding vehicle in developing countries which have significant traffic as well as developed economies involving high speed biking... The developing countries face problem of heavy unregulated traffic which creates safety risk for the riders of the vehicle. Further, the blind spot in the vehicle leaves an open non visualized area, that is, the area which is not in the visual range of the riders. Also, in that particular area the riders are unable to see the approaching vehicles from either sides or rear side of the vehicle. Hence, one solution proposed for this problem is to use rear view mirror in the vehicle. However, during cornering of the vehicle, the blind spot area shifts, hence, having rear view mirror also does not effectively work. Using the rear-view mirror as a blind spot detector, the rider has to keep in mind the location of the mirror, shape and size of the mirror, orientation of the mirror. Further, as the rear view of the vehicle is not constant during leaning or cornering of the vehicle, hence at that point of time also, the mirrors do not cover the blind spot of the vehicle. Additional problems like vibration of the mirror at high speed occurs and also, when the rider is riding vehicle in high speed, then the rider may not get sufficient reaction time to avoid the obstacle thereby resulting into collision or accident. Further, taking reference of novice riders, there is always a fear/anxiety associated with the novice riders while riding in a dense traffic condition in the developing country as well as on high speed highways in developed economies. Therefore, there is a need of a blind spot detection system which detects the blind spot in the vehicle irrespective of the sides of the vehicle.

,.

Further, another system for detecting blind spot area is active and passive infrared detectors, optical detectors, radar-based detectors, and the like. A blind spot detection system requires a user interface in order to inform the user that an object is in the rider's blind spot area. In order to be most effective, such user interface should be natural and provide an intuitive warning to the user. One known art approach has been to provide a series of indication lights on exterior mirror on the same side of the vehicle being protected by a blind spot detector. Alternatively, a display system may be mounted inside the vehicle compartment, but on the pillar adjacent the exterior rearview mirror. Such positioning of the display, on or adjacent to, the exterior / primary rearview mirror provides association with the side of the vehicle being covered by the blind spot detector. The primary rear-view mirror is typically glanced by the rider to perform any pre-maneuver evaluation. As the rider and his vision are processing considerable number of information while riding in a fraction of a second, it may be possible for the rider to overlook indications made by display systems associated with the blind spot indicator or the rearview mirror until late in the pre-maneuver evaluation. The presence of precipitation or road dirt on the display unit, window glass, canopy or the mirror itself may further reduce the clarity of indication to the rider.

In known art, a blind spot detection system is disclosed with mechanically aligned radar. With the help of a mechanical arrangement, the radar changes its orientation as the lean angle of the vehicle changes. This configuration enables the overcoming of the problem related to the change of blind spot area due to leaning of the vehicle. However, this configuration is only limited to the detection of blind spot area at the rear side of the vehicle. Additional problem, for example, blind spot area on the sides of the vehicle still exists in this configuration.

In another known art, radar is placed on the rear of the vehicle to monitor the rear blind spot area and offers an alert to the rider based on time to collision estimation. This system has its own limitation that the blind spot detection system will work only when the vehicle crosses threshold speed. Thereby, this raises additional problem for the vehicle moving slowly on road because of dense traffic. As in that case the disclosed blind spot detection system will not be able to detect the approaching vehicle hence, it raises safety risk for the riders.

Further, in another known art, a camera is placed on the back side of the helmet to give a view of the road traffic on the rear of the vehicle. The view is projected to the rider on the Helmet's visor with the help of a Heads- Up display. The solution as disclosed to detect the blind spot has its own limitation, like as, helmet is generally not stable and hence, will create problem for the riders while riding the vehicle.

Furthermore, in another known art, a center blind spot mirror with a wide angle is mounted in front direction of the vehicle. This however solves the problem of blind spot area at the rear side of the vehicle. But does not cover the side blind spots area in the vehicle.

Hence, there exists a challenge of designing a blind spot detection system, which can satisfactorily covers all side of the vehicle and removes blind spot area in the vehicle, thereby increasing riders safety in a dense traffic also and overcoming all problems of known art. Additionally there exists a challenge of designing a blind spot detection system which can work irrespective of the vehicle speed.

Therefore, there is a need to have an improved blind spot detection system which overcomes all of the above problems and other problems known in art.

The present subject matter discloses a blind spot detection system having sensor unit and an alert indication unit to ensure coverage of blind spot area in the vehicle from all sides while ensuring safety of the riders.

As per one aspect of the present invention, a vehicle comprising a blind spot detection system is disclosed. The blind spot detection system includes a sensor unit having blind spot sensors, a controller and an alert indication unit. Further, as per one aspect of the present invention, the blind spot sensors are located to cover blind spot areas of the vehicle, for example, at least one blind spot sensor in left side of the vehicle, at least one blind spot sensor in right side of the vehicle and a single sensor at the rear side of the vehicle. Further, as per one aspect of the present invention, a DC power supply device provides power to the blind spot detection system provided in the vehicle.

Further, as per one aspect of the present invention, the blind spot sensors as disposed on the sides of the vehicle, senses the obstacle approaching the vehicle and hence sends signal to the controller where the system works on Time of flight principle. The time of flight principle is defined as a method for measuring a distance between a sensor and an object, based on the time difference between the emission of a signal and its return to the sensor, after being reflected by the object. So here, the controller after receiving the output signal from the blind spot sensors computes the distance, velocity and angle of detected vehicles/obstacles. If the vehicle/obstacles fall in the blind spot areas of the vehicle, the controller sends an alert signal to respective alert indication unit, i.e., left or right indication unit based on the presence of obstacles/vehicles. Hence, the alert indication unit indicates to the riders about the approaching obstacles\vehicles with the direction specific information. This configuration assists to protect the riders from accident, collision etc. The configuration as explained above also covers the blind spot detection during cornering or leaning of the vehicle, thereby ensuring the safety of the riders.

The below paragraph further elaborates on the methodology used by the controller of the blind spot detection system. As per one aspect of the present invention, when the vehicle starts, the controller receives raw signal generated by the blind spot sensors located on the vehicle regarding the approaching or surrounding vehicle/obstacles. Subsequently, the controller analyzes the received raw signal from the blind spot sensors. After analyzing the received raw signal with respect to the velocity, distance and angle of the approaching or surrounding vehicle/obstacles, the controller decides whether the approaching vehicle is an obstacle. If there is an obstacle, controller further checks the status of left, right and rear blind spot sensor. If the obstacle is detected by at least one of the left blind spot sensor, controller issues an alert to the rider through suitable means, for example, alert indication unit by activating the left alert indicator or collision unit. If the obstacle is detected by at least one of the right blind spot sensor, controller issues an alert to the rider by activating the right alert indicator or collision unit.

If the obstacle is detected by the rear blind spot sensor, controller analyzes whether the obstacle is approaching towards left side of the vehicle from rear side of the vehicle or approaching towards right side of the vehicle from the rear side of the vehicle. If it is approaching from the left, the left indicator unit flashes continuously to indicate its presence. If it is approaching from the right, the right indicator unit flashes continuously to indicate its presence. In some cases, the obstacle is detected by at least one of the left & right blind spot sensor as well as the rear blind spot sensor, then the glowing intensity of the alert indicator increases to indicate a higher risk. Similarly, if the obstacle is detected on both left & right side of the vehicle, both the alert indicator will glow to indicate the presence of obstacle on both the sides. In one implementation, alert indication unit can be also a visual or audio alert. The visual alert can be a led indicator placed on a location on vehicle which is in the field of view of the rider while riding the saddle type vehicle e.g. two wheeled vehicle. Audio indicator can also be utilised and placed inside the helmet to give voice based assistance.

Further, as per another aspect of the present invention, a blind spot detection system includes a sensor unit, a controller, an alert indication unit and a switch. The switch as located provides ease of accessibility of the left and right blind spot sensor where the riders can manually activates the sensors depending on the traffic density on the road..

In the ensuing exemplary aspects, the vehicle is a two wheeled saddle type vehicle. However, it is contemplated that the concepts of the present invention may be applied to any of the two wheeled saddled, three wheeled saddled and four wheeled saddled type vehicle.

The various other features of the invention are described in detail below with an embodiment of a two wheeled vehicle with reference to the accompanying drawings. In the drawings, like reference numbers generally indicate identical, functionally similar, and/or structurally similar elements. The drawing in which an element first appears is indicated by the leftmost digit(s) in the corresponding reference number. With reference to the accompanying drawings, wherein the same reference numerals will be used to identify the same or similar elements throughout the several views. The present subject matter is further described with reference to accompanying figures. It should be noted that the description and figures merely illustrate principles of the present subject matter.

Further "front" and "rear", and "left" and "right" referred to in the ensuring description of the illustrated embodiment refer to front and rear, and left and right directions as seen in a state of being seated on a seat of the saddle type vehicle. Furthermore, a longitudinal axis refers to a front to rear axis relative to the vehicle, while a lateral axis refers to a side to side, or left to right axis relative to the vehicle. Also, it is to be understood that the phraseology and terminology used herein is for the purpose of description and should not be regarded as limiting.

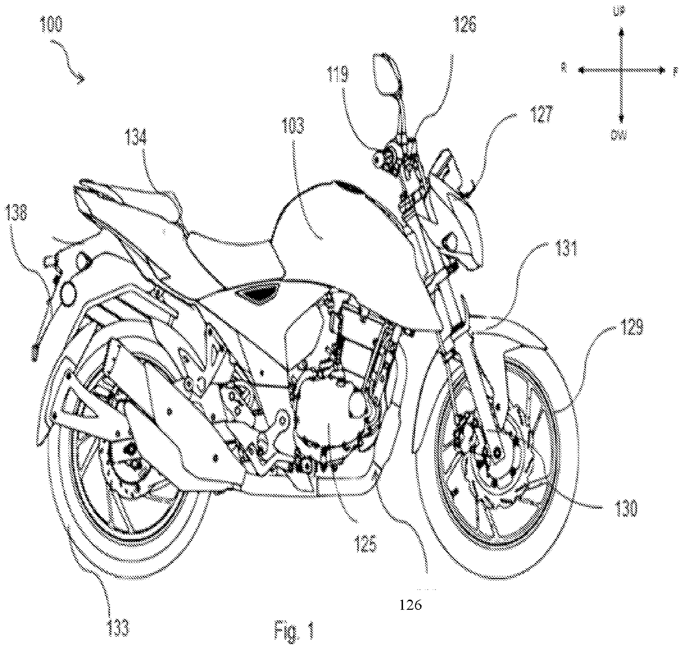

**Fig. 1** is a right side view of an exemplary saddle type vehicle. The vehicle **(100)** has a frame assembly (not shown), which acts as the skeleton for bearing the loads. Instrument cluster **(119)** is mounted on handle bar assembly **(126).** The handle bar assembly **(126)** is disposed over the head tube **(not shown)** and it includes brake levers **(not shown).** The handle bar assembly **(126)** is connected to a front wheel **(129)** by one or more front suspension(s) **(130).** A front fender **(131)** is disposed above the front wheel **(129)** for covering at least a portion of the front wheel **(129).** A fuel tank **(103)** is mounted to the main tube **(not shown)** of the frame **(not shown)** and it is disposed in the front portion F of a space of the frame **(not shown).** The vehicle **(100)** having lighting means which includes Head lamp **(127),** Tail lamp (not shown), Turning indicators includes front side indicators **(not shown)** and rear side indicator (not shown) respectively. A rear fender **(138)** is projected outwardly of the vehicle systems and protects pillion from mud splash as well as to protect the rear wheel **(133)** from external components. A power unit **(125)** is mounted to the lower portion of the vehicle **(100).** In an embodiment, the power unit **(125)** is an IC engine. The fuel tank **(103)** is functionally connected to the engine **(125).** The seat **(132)** is located at the back region of the fuel tank **(103)** and is extended in a longitudinal direction along the seat frames. As per one embodiment of the present invention, an exhaust system **(126)** is connected to the engine **(125)** and extended rearwardly of the vehicle **(100).**

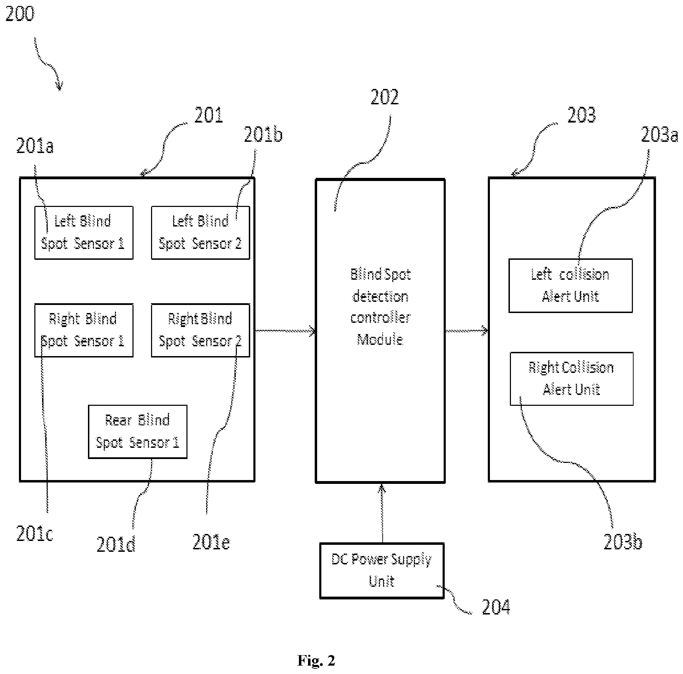

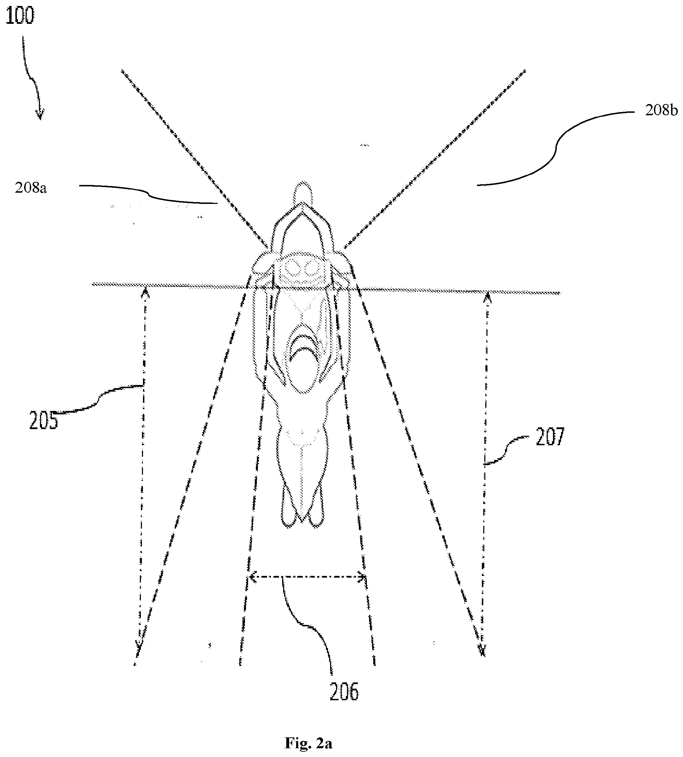

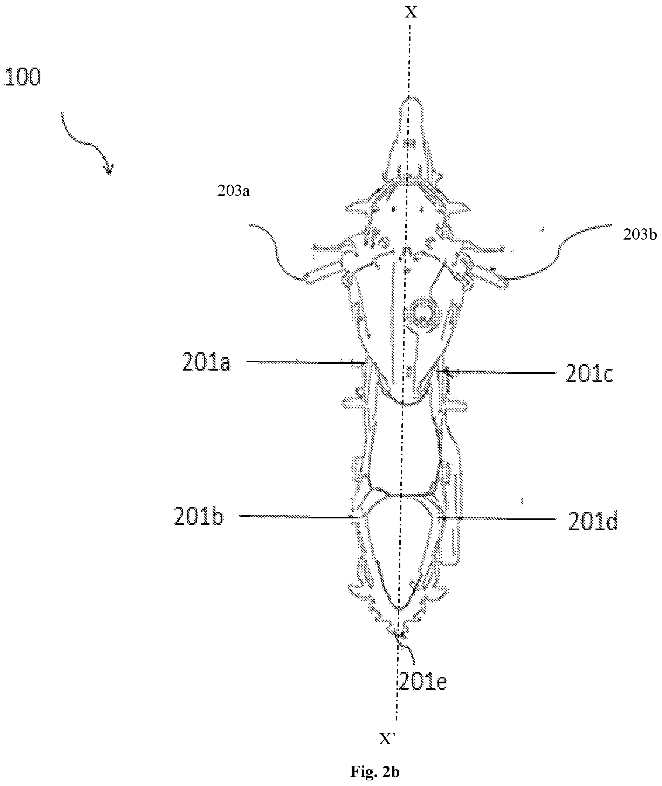

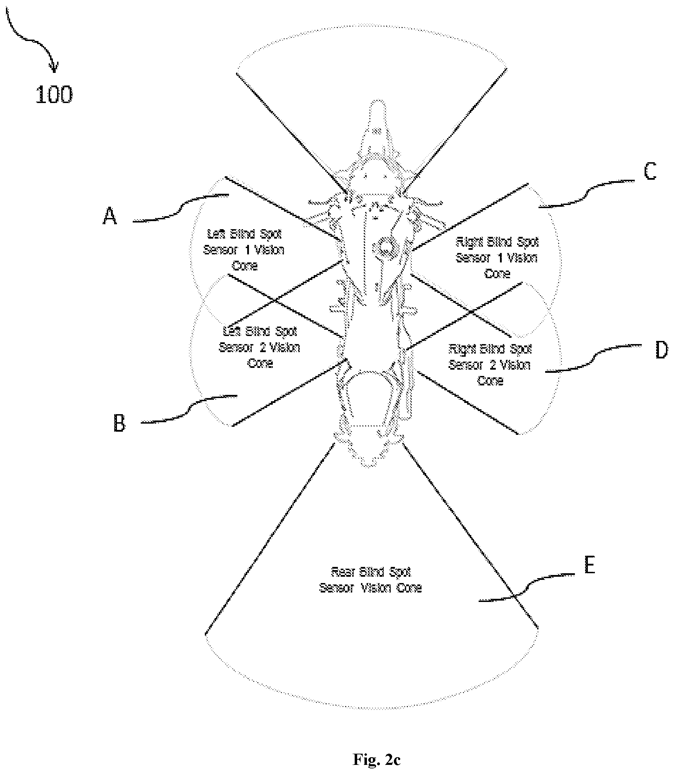

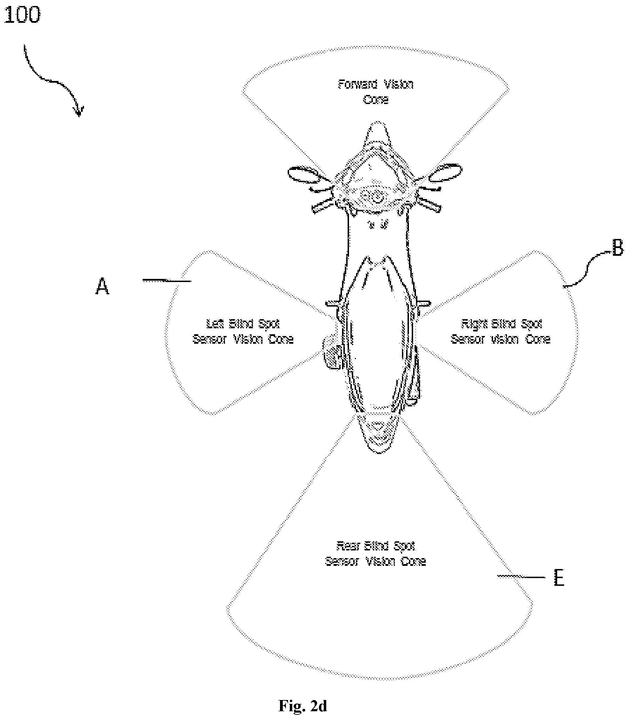

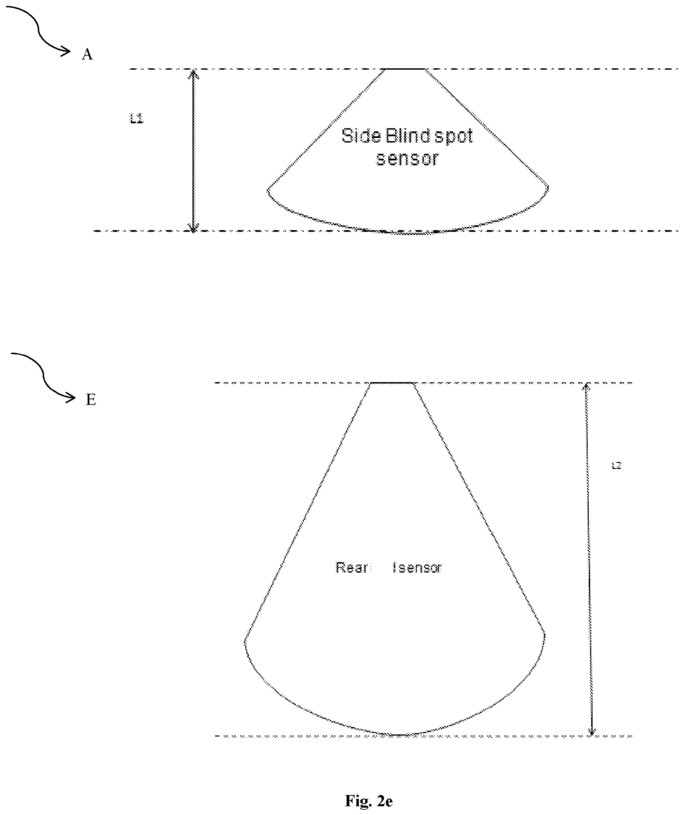

**Fig. 2** is a block diagram for a blind spot detection system as per one embodiment of the present invention. The blind spot detection system **(200)** includes sensor unit **(201)** having blind spot sensors **(201a, 201b, 201c, 201d, and 201e),** a controller **(202)** and an alert indication unit **(203).** The alert indication unit **(203)** includes a left collision alert unit **(203a)** and a right collision alert unit **(203b).** As per one implementation, the left collision alert unit **(203a)** and the right collision alert unit **(203b)** is located on the handle bar assembly of the vehicle. As per another implementation, indicator to the riders can be given as a visual alert indicator can also be placed on instrument cluster. Further, as per one embodiment of the present invention, the blind spot sensors **(201a, 201b, 201c, 201d, and 201e)** are located to cover blind spot areas **(205, 206 and 207)** of the vehicle **(as shown in** **fig. 2b****),** where the blind spot region is shown in **fig. 2a****.** Further, for example, at least one blind spot sensor (201a, 201b) is located on left side of the vehicle, at least one blind spot sensor (201c, 201d) is located on right side of the vehicle and a single sensor (201e) is located on rear side of the vehicle **(as shown in** **fig. 2b****).** As per one embodiment of the present invention, the left blind spot sensor 1 **(201a)** is located on the side of the fuel tank **(103)** of the vehicle **(100)** and the left blind spot sensor 2 **(201b)** is located on the left side substantially below the rear pillion seat of the vehicle. Further, the left blind spot sensor 1 **(201a)** and the left blind spot sensor 2 **(201b)** are disposed along the one side with respect to the longitudinal mid plane **(XX')** of the vehicle. Further, as per one embodiment of the present invention, the right blind spot sensor 1 **(201c)** is located on the right side of the fuel tank **(103)** of the vehicle **(100)** and the right blind spot sensor 2 **(201d)** is located on the right side substantially below the rear pillion seat of the vehicle. Further, the right blind spot sensor 1 **(201c)** and the right blind spot sensor 2 **(201d)** are disposed along another side with respect to the mid plane **(XX')** of the vehicle. The left blind spot sensor 1 **(201a),** the left blind spot sensor 2 **(201b),** the right blind spot sensor 1 **(201c)** and the right blind spot sensor 2 **(201d)** are also referred as side sensors of the vehicle. The rear blind spot sensor **(201e)** is located above the rear license plate mounting bracket in a vehicle. As per another implementation, at least a rear blind spot sensor is located above the rear license plate mounting bracket in a vehicle

Further, as per one embodiment of the present invention, the blind spot sensors **(201a, 201b, 201c, 201d, and 201e)** as disposed on the sides of the vehicle, senses the obstacle approaching the vehicle and hence sends signal to the controller **(202)** where the system works on Time of flight principle. The time of flight principle is defined as a method for measuring a distance between a sensor and an object, based on the time difference between the emission of a signal and its return to the sensor, after being reflected by the object. So here, the controller **(202)** after receiving the output signal from the blind spot sensors computes the distance, velocity and angle of detected vehicles/obstacles. If the vehicle/obstacles falls in the blind spot areas **(205, 206 and 207)** of the vehicle, the controller **(202)** sends an alert signal to respective alert indication unit, i.e., left or right indication unit **(203a, 203b)** based on the presence of obstacles/vehicles. Hence, the alert indication unit indicates to the riders about the approaching obstacles\vehicles with the direction specific information. This configuration assists to protect the riders from accident, collision etc. The configuration as explained above also covers the blind spot detection during cornering or leaning of the vehicle, thereby ensuring the safety of the riders.

The location of the side blind spot sensors depends on the various factors, for example, forward peripheral regions **(208a, 208b)** of the vehicle, length of the vehicle. The forward peripheral regions **(208a, 208b)** are inversely proportional to the side blind spot areas and the side blind spot areas are directly proportional to the number of sensors. For example, in a saddle type vehicle, forward peripheral region is less as the rider has a mobility restraint and legs of the rider are constrained near fuel tank of the vehicle. As the forward peripheral region is less, hence the side blind spot areas in the saddle type vehicle are more. Further, since the side blind spot areas are more in the saddle type vehicle, the number of blind spot sensors required are higher in the vehicle **(as shown in** **fig. 2c****).** Also, vision cone (A, B, C, D & E) generated by the blind spot sensors eliminates the blind spot areas (side blind spot areas and rear blind spot area) of the vehicle. Taking another case of straddle type vehicle according to same relation, forward peripheral region **(208a, 208b)** is more as compared to saddle type vehicle, as legs of the rider are freely movable, leading to increased mobility or increased degree of freedom for the human body to cover a wider vision cone. As the forward peripheral region is more, hence the side blind spot areas in the straddle type vehicle are less. Further, since, the side blind spot areas are less in the straddle type vehicle, the number of blind spot sensors located is lesser as compared to the saddle type vehicle **(as shown in** **fig. 2d****).** Also, vision cone (A, B & E) generated by the blind spot sensors covers the blind spot areas (side blind spot areas and rear blind spot area) and thus eliminates the blind spot areas in straddle type vehicle. Further, as per one embodiment of the present invention, DC power supply unit **(204)** provides power supply to the blind spot detection system **(200)** provided in the vehicle.

**Fig. 2e** is a predetermined range of vision cone of at least a sensor as per one embodiment of the present invention. Further, as per one embodiment of the present invention, the side blind spot sensors are an ultrasonic sensor and the rear blind spot sensor is a radar sensor. The vision cone of side blind spot sensor's detection range is in predetermined range L1. The predetermined range L1 is in range of 0-7 m with respect the location of sensor. Further, the vision cone of rear blind spot sensor's detection range is in predetermined L2. The predetermined range L2 is in range of 0-70 m with respect to the location of sensor. This ensures the coverage of the blind spot areas in the vehicle and also, ensures safety of the rider riding on the vehicle. As per another embodiment of the present invention, the sensors can be lidar sensors, camera etc.

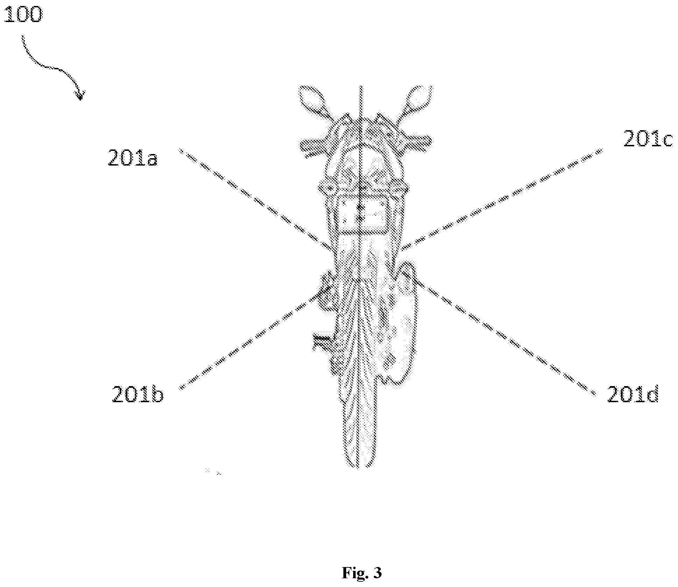

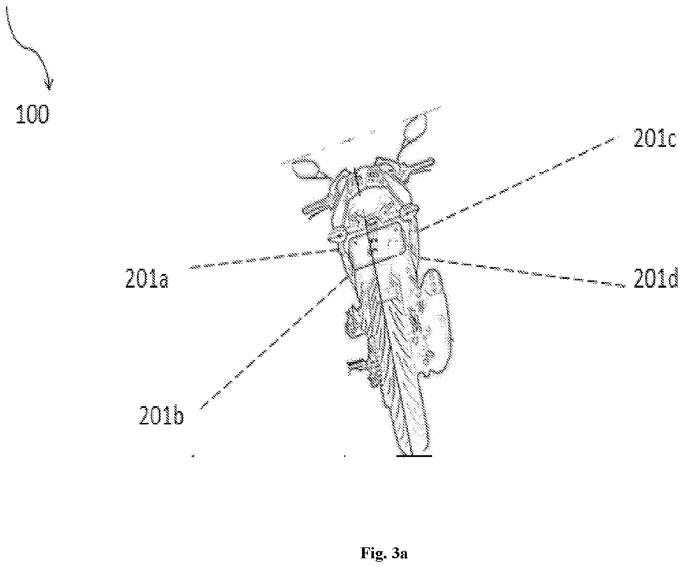

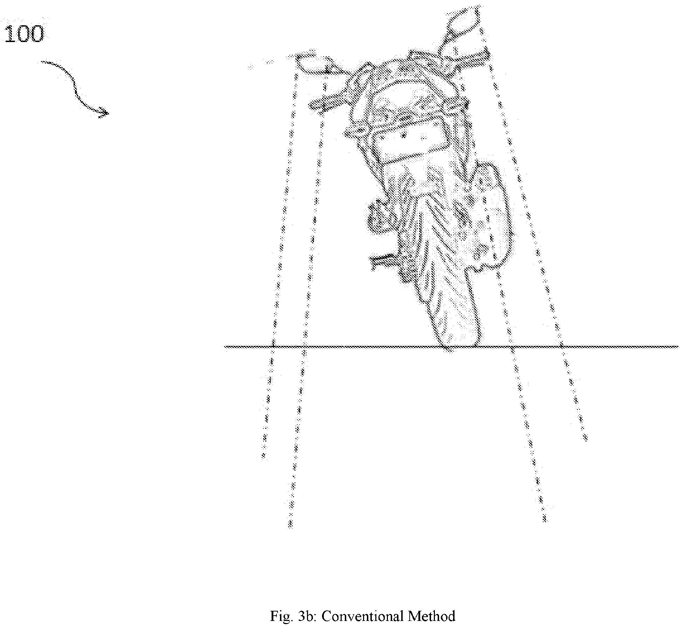

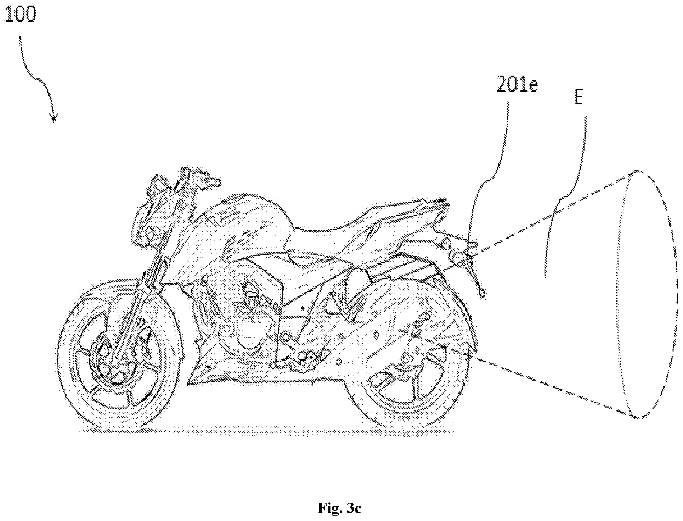

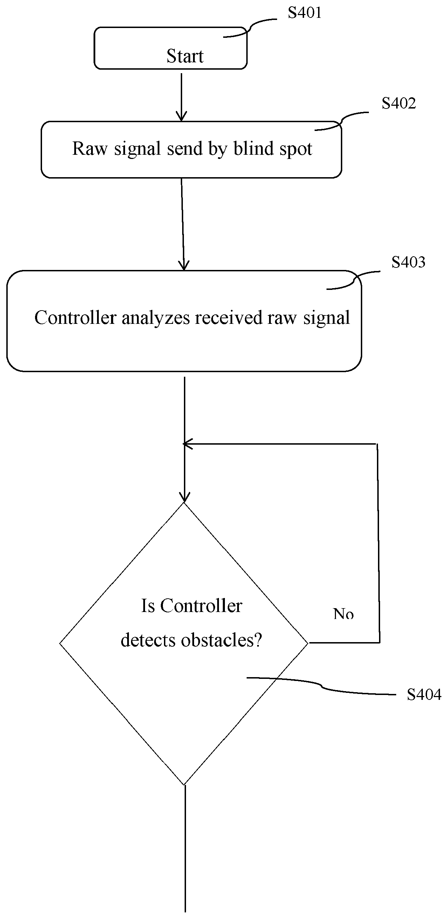

**Fig. 3****,** **3a****,** **3c** are a vehicle view at different angle as per one embodiment of the present invention. Further, as per one embodiment of the present invention, when the vehicle is static **(as shown in** **fig. 3****),** the side blind spot sensors cover blind spot area present in the side of the vehicle. As per one embodiment of the present invention, when the vehicle is leaning\cornering at predetermined angle, the blind spot area of the vehicle also shifts. Therefore, the side blind spot sensors covers the shifted blind spot area of the vehicle unlike as conventional method **(as shown in** **fig. 3b****),** where manual shifting of rear view mirror is required to make rider aware of the approaching vehicle in blind spot area. Further, as per one embodiment of the present invention, during leaning\cornering of the vehicle, the vision cone of the rear blind spot sensor remains same and covers the rear blind spot area of the vehicle during leaning\cornering of the vehicle. Hence, this configuration ensures protection of the vehicle from collision or accidents.

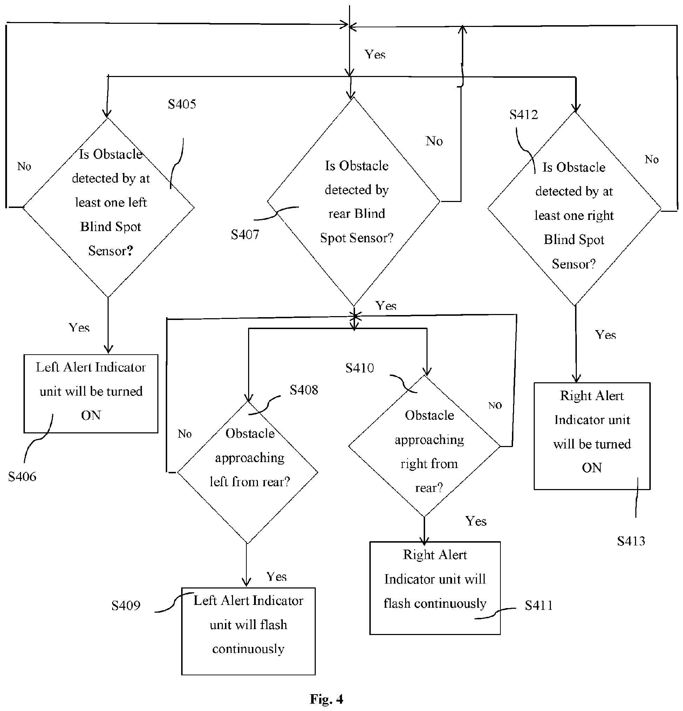

**Fig. 4** is a flowchart explaining methodology for detection by blind spot detection system. As per one aspect of the present invention, when the vehicle starts **(S401),** the controller receives raw signal generated by the blind spot sensors located on the vehicle regarding the approaching or surrounding vehicle/obstacles **(S402).** Subsequently, the controller analyzes the received raw signal from the blind spot sensors **(S403).** After analyzing the received raw signal with respect to the velocity, distance and angle of the approaching or surrounding vehicle/obstacles, the controller decides whether the approaching vehicle is an obstacle **(S404).** If there is an obstacle, controller further checks the status of left, right and rear blind spot sensor. If the obstacle is detected by at least one of the left blind spot sensor **(S405),** controller issues an alert to the rider through suitable means, for example, alert indication unit by activating the left alert indicator or collision unit **(S406).** If the obstacle is detected by at least one of the right blind spot sensor **(S412),** controller issues an alert to the rider by activating the right alert indicator or collision unit **(S413).**

If the obstacle is detected by the rear blind spot sensor, controller analyzes whether the obstacle is approaching towards left side of the vehicle from rear side of the vehicle **(S408)** or approaching towards right side of the vehicle from the rear side of the vehicle **(S410).** If it is approaching from the left, the left indicator unit flashes continuously to indicate its presence **(S409).** If it is approaching from the right, the right indicator unit flashes continuously to indicate its presence **(S411).** In some cases, the obstacle is detected by at least one of the left & right blind spot sensor as well as the rear blind spot sensor, then the glowing intensity of the alert indicator increases to indicate a higher risk. Similarly, if the obstacle is located on both left & right side of the subject vehicle, both the alert indicator will glow to indicate the presence of obstacle on both the sides. In one implementation, alert indication unit can be also a visual or audio alert. The visual alert can be a led indicator placed on a location on vehicle which is in the field of view of the rider while riding the two- wheeler. Audio indicator can also be utilised and placed inside the helmet to give voice based assistance. As per alternate embodiments, the current invention can be implemented in a three or four wheeled saddled vehicle to achieve a safe and robust blind spot recognition and alert mechanism for the user of the saddled vehicle.

Further, as per another embodiment of the present invention, a blind spot detection system includes sensors, a controller, an alert indication unit and a switch disposed in an accessible region for the rider to access. The switch as located provides ease of accessibility of the left and right blind spot sensor where the rider can manually access the activation of the sensors depending on the traffic density on the road.

The embodiments explained in Fig. 2 and method explained in fig. 4 of the present invention helps in ensuring the elimination of blind spot area in the vehicle as well as overcoming all the problems known in the art.

Advantageously, the embodiments of the present invention, describes the potential modifications in the blind spot detection system which covers and eliminates the blind spot area in the vehicle hence, ensuring safety for the riders. This facilitates the simple system which ensures the safety of the riders.

### List of reference symbol:

**Fig. 1****:**
   100: Saddle type Vehicle
   126: Handle Bar Assembly
   119: Instrument Cluster
   127: Head Lamp
   131: Front Fender
   129: Front Wheel
   130: Front Suspension
   125: Engine
   103: Fuel Tank
   134: Seat
   138: Rear Fender
   133: Rear Wheel
   126: Exhaust System
**Fig. 2**
   200: Blind spot detection system
   201 (201a, 201b, 201c, 201d, 201e): Sensors
   202: Controller
   203: Alert Indication Unit
   203a; left Collision Alert Unit
   203b: Right Collision Alert Unit
**Fig. 2a**
   205: Left Blind Spot Area
   206: Rear Blind Spot Area
   207: Right Blind Spot Area
   208a, 208b: Forward Peripheral Region
**Fig. 2c**
   A: Left Blind Spot Sensor 1 vision cone.
   B: Left Blind Spot Sensor 2 vision cone
   C: Right Blind Spot Sensor 1 vision cone
   D; Right Blind Spot Sensor 2 vision cone
   E: Rear Blind Spot sensor vision cone
**Fig. 2e****:**
   L1: Predetermined range of Side Blind Spot Sensors
   L2: Predetermined range of Rear Blind Spot Sensor

## Claims

1. A two, three, or four-wheeled saddle-type vehicle (100) having a blind spot detection system (200), said blind spot detection system (200) comprising:
a sensor unit (201), a controller (202), and an alert indication unit (203);
said sensor unit (201) includes a left blind spot sensor 1 (201a), a right blind spot sensor 1 (201c), and a rear blind spot sensor (201e);
said left blind spot sensor 1 (201a) is located on one side of said vehicle (100) with respect to a longitudinal mid plane axis (XX') of said vehicle (100) and said right blind spot sensor 1 (201c) is located on another side of said vehicle (100) with respect to said longitudinal mid plane axis (XX') of said vehicle (100), and said left blind spot sensor 1 (201a) and said right blind spot sensor 1 (201c) are located to detect objects in blind spot areas (205, 207) of said vehicle (100); and
said rear blind spot sensor (201e) being located rearwardly of said vehicle (100) to detect objects in blind spot areas (206) on a rear side of said vehicle (100);
wherein
said sensor unit (201) includes the left blind spot sensor 1 (201a) and a left blind spot sensor 2 (201b), and the right blind spot sensor 1 (201c) and a right blind spot sensor 2 (201d),
said vehicle (100) includes a fuel tank (103) and a rear pillion seat (134),
**characterized in that**
said left blind spot sensor 1 (201a) is located on a left side of said fuel tank (103) with respect to said longitudinal mid plane axis (XX') of said vehicle (100); and
said left blind spot sensor 2 (201b) is located below said rear pillion seat (134) of said vehicle (100) with respect to said longitudinal mid plane axis (XX') of said vehicle (100).

2. Two, three, or four-wheeled saddle-type vehicle (100) with a blind spot detection system (200) as claimed in claim 1, wherein said right blind spot sensor 1 (201c) is located on a right side of said fuel tank (103) of said vehicle (100) with respect to said longitudinal mid plane axis (XX') of said vehicle (100).

3. Two, three, or four-wheeled saddle-type vehicle (100) with a blind spot detection system (200) as claimed in claim 1, wherein said right blind spot sensor 2 (201d) is located on a right side below said rear pillion seat (134) of said vehicle (100) with respect to said longitudinal mid plane axis (XX') of said vehicle (100).

4. Two, three, or four-wheeled saddle-type vehicle (100) with a blind spot detection system (200) as claimed in claim 1, wherein said sensor unit (201) is electrically connected to said controller (202) and said controller (202) is electrically connected to said alert indication unit (203).

5. Two, three, or four-wheeled saddle-type vehicle (100) with a blind spot detection system (200) as claimed in claim 4, wherein said alert indication unit (203) is an audio or visual alert indication unit to provide an alert to said rider of said vehicle (100).

6. Two, three, or four-wheeled saddle-type vehicle (100) with a blind spot detection system (200) as claimed in claim 1, wherein said blind spot detection system includes a switch disposed in an accessible region for the rider to access said left blind spot sensors 1 and 2 (201a, 201b) and said right blind spot sensors 1 and 2 (201c, 201d) in said vehicle (100).

7. Two, three, or four-wheeled saddle-type vehicle (100) with a blind spot detection system (200) as claimed in claim 1, wherein, said left blind spot sensor 1 (201a), said left blind spot sensor 2 (201b), said right blind spot sensor 1 (201c), and said right blind spot sensor 2 (201d) configured to form a plurality of vision cones (A, B, C, and D), and wherein said vision cones (A, B,C, and D) includes a detection region in a predetermined range of L1 with respect to a location of said left blind spot sensor 1 (201a), said left blind spot sensor 2 (201b), said right blind spot sensor 1 (201c), and said right blind spot sensor 2 (201d).

8. Two, three, or four-wheeled saddle-type vehicle (100) with a blind spot detection system (200) as claimed in claim 7, wherein said predetermined range L1 is in range of 0 meter to 7 meters.

9. Two, three, or four-wheeled saddle-type vehicle (100) with a blind spot detection system (200) as claimed in claim 1, wherein said rear blind spot sensor (201e) includes a vision cone (E), and wherein said vision cone (E) is configured with a detection region in a predetermined range L2 with respect to a location of said rear blind spot sensor (201e).

10. Two, three, or four-wheeled saddle-type vehicle (100) with a blind spot detection system (200) as claimed in claim 9, wherein said predetermined range L2 is in range of 0 meter to 70 meters.

11. Two, three, or four-wheeled saddle-type vehicle (100) with a blind spot detection system (200) as claimed in claim 1, wherein said left blind spot sensor 1 (201a), said left blind spot sensor 2 (201b), said right blind spot sensor 1 (201c) and said right blind spot sensor 2 (201d) is an ultrasonic sensor.

12. Two, three, or four-wheeled saddle-type vehicle (100) with a blind spot detection system (200) as claimed in claim 1, wherein said rear blind spot sensor (201e) is a radar sensor.

13. A method for detection of obstacle approaching in blind spot area (205, 206, 207) by a blind spot detection system (200) of a two, three, or four-wheeled saddle-type vehicle (100) according to any one of claims 1 to 12, said method comprising the steps of:
starting of said vehicle (100) (S401);
sending raw signals to a controller (202) from at least one of the left blind spot sensors 1 and 2 (201a, 201b), at least one of the right blind spot sensors 1 and 2 (201c, 201d) and a rear blind spot sensor (201e) (S402);
analyzing received raw signal by said controller (202) (S403);
deciding whether approaching vehicle (100) being an obstacle (S404) and checking status of said left blind spot sensors 1 and 2 (201a,201b), said right blind spot sensors 1 and 2 (201c,201d) and said rear blind spot sensor (201e);
detecting said obstacle by said left blind spot sensors 1 and 2 (201a, 201b) (S405);
communicating said alert to said rider through a left alert indicator or collision unit (203a) (S406), when said obstacle is detected by said left blind spot sensors 1 and 2 (201a, 201b);
detecting said obstacle by said right blind spot sensors 1 and 2 (201c, 201d) (S412);
communicating alert to said rider through said right alert indicator or collision unit (203b) (S413), when said obstacle is detected by said right blind spot sensors 1 and 2 (201c, 201d);
detecting said obstacle by said rear blind spot sensors 1 and 2 (201e) (S407);
analyzing whether said obstacle approaching a left side of said vehicle (100) from a rear side of said vehicle (100) (S408);
communicating alert to said rider through said left alert indicator or collision unit (203a) (S409);
analyzing whether said obstacle approaching a right side of said vehicle (100) from said rear side of said vehicle (100) (S410); and
communicating alert to said rider through said right alert indicator or collision unit (203b) (S411).

14. The method for said two, three, or four-wheeled saddle-type vehicle (100) as claimed in claim 13, wherein said obstacle when detected by one of said left blind spot sensors 1 and 2 (201a, 201b) and said right blind spot sensors 1 and 2 (201c, 201d), and said rear blind spot sensor (201e), then glowing intensity of said alert indicator or collision unit (203, 203a, 203b) increases to indicate a higher risk to said rider of said vehicle (100).

15. The method for said two, three, or four-wheeled saddle type vehicle (100) as claimed in claim 13, wherein said obstacle when detected by said left blind spot sensors 1 and 2 (201a, 201b) and said right blind spot sensors 1 and 2 (201c, 201d), then said left alert indicator or collision unit (203a) and right alert indicator or collision unit (203b) glows to indicate presence of said obstacle on both sides to said rider of said vehicle (100).

## Patentansprüche

1. Zwei-, drei- oder vierrädriges Sattelfahrzeug (100) mit einem Totwinkel-Erkennungssystem (200), wobei das Totwinkel-Erkennungssystem (200) aufweist:
eine Sensoreinheit (201), eine Steuerung (202) und eine Warnanzeigeeinheit (203),
wobei die Sensoreinheit (201) einen linken Totwinkel-Sensor 1 (201a), einen rechten Totwinkel-Sensor 1 (201c) und einen hinteren Totwinkel-Sensor (201e) beinhaltet,
wobei der linke Totwinkel-Sensor 1 (201a) auf einer Seite des Fahrzeugs (100) in Bezug auf eine Längsmittelebenenachse (XX') des Fahrzeugs (100) liegt und der rechte Totwinkel-Sensor 1 (201c) auf einer anderen Seite des Fahrzeugs (100) in Bezug auf die Längsmittelebenenachse (XX') des Fahrzeugs (100) liegt, und der linke Totwinkel-Sensor 1 (201a) sowie der rechte Totwinkel-Sensor 1 (201c) zum Erkennen von Objekten in Gebieten der toten Winkel (205, 207) des Fahrzeugs (100) angeordnet sind, und
der hintere Totwinkel-Sensor (201e) hinter dem Fahrzeug (100) liegt zum Erkennen von Objekte in Totwinkelgebieten (206) auf der Rückseite des Fahrzeugs (100);
wobei
die Sensoreinheit (201) den linken Totwinkel-Sensor 1 (201a) und einen linken Totwinkel-Sensor 2 (201b) sowie den rechten Totwinkel-Sensor 1 (201c) und einen rechten Totwinkel-Sensor 2 (201d) beinhaltet,
das Fahrzeug (100) einen Kraftstofftank (103) und einen hinteren Soziussitz (134) beinhaltet, **dadurch gekennzeichnet, dass**
der linke Totwinkel-Sensor 1 (201a) sich auf der linken Seite des Kraftstofftanks (103) in Bezug auf die Längsmittelebenenachse (XX') des Fahrzeugs (100) befindet; und
der linke Totwinkel-Sensor 2 (201b) sich unterhalb des hinteren Soziussitzes (134) des Fahrzeugs (100) in Bezug auf die Längsmittelebene (XX') des Fahrzeugs (100) befindet.

2. Zwei-, drei- oder vierrädriges Sattelfahrzeug (100) mit einem Totwinkel-Erkennungssystem (200) nach Anspruch 1, wobei der rechte Totwinkel-Sensor 1 (201c) sich auf der rechten Seite des Kraftstofftanks (103) des Fahrzeugs (100) in Bezug auf die Längsmittelebenenachse (XX') des Fahrzeugs (100) befindet.

3. Zwei-, drei- oder vierrädriges Sattelfahrzeug (100) mit einem Totwinkel-Erkennungssystem (200) nach Anspruch 1, wobei der rechte Totwinkel-Sensor 2 (201d) sich auf der rechten Seite unterhalb des hinteren Soziussitzes (134) des Fahrzeugs (100) in Bezug auf die Längsmittelebenenachse (XX') des Fahrzeugs (100) befindet.

4. Zwei-, drei- oder vierrädriges Sattelfahrzeug (100) mit einem Totwinkel-Erkennungssystem (200) nach Anspruch 1, wobei die Sensoreinheit (201) elektrisch mit der Steuerung (202) verbunden ist und die Steuerung (202) elektrisch mit der Warnanzeigeeinheit (203) verbunden ist.

5. Zwei-, drei- oder vierrädriges Sattelfahrzeug (100) mit einem Totwinkel-Erkennungssystem (200) nach Anspruch 4, wobei die Warnanzeigeeinheit (203) eine akustische oder visuelle Warnanzeigeeinheit zum Warnen des Fahrers des Fahrzeugs (100) ist.

6. Zwei-, drei- oder vierrädriges Sattelfahrzeug (100) mit einem Totwinkel-Erkennungssystem (200) gemäß Anspruch 1, wobei das Totwinkel-Erkennungssystem einen Schalter beinhaltet, der in einem für den Fahrer zugänglichen Bereich zur Erreichbarkeit der linken Totwinkel-Sensoren 1 und 2 (201a, 201b) und der rechten Totwinkel-Sensoren 1 und 2 (201c, 201d) in dem Fahrzeug (100) angeordnet ist.

7. Zwei-, drei- oder vierrädriges Sattelfahrzeug (100) mit einem Totwinkel-Erkennungssystem (200) nach Anspruch 1, wobei der linke Totwinkel-Sensor 1 (201a), der linke Totwinkel-Sensor 2 (201b), der rechte Totwinkel-Sensor 1 (201c) und der rechte Totwinkel-Sensor 2 (201d) eingerichtet sind, eine Vielzahl von Sichtkegeln (A, B, C und D) bilden, und wobei die Sichtkegel (A, B, C, und D) einen Erfassungsbereich in einem vorbestimmten Bereich von L1 in Bezug auf eine Position des linken Totwinkel-Sensors 1 (201a), des linken Totwinkel-Sensors 2 (201b), des rechten Totwinkel-Sensors 1 (201c) und des rechten Totwinkel-Sensors 2 (201d) enthalten.

8. Zwei-, drei- oder vierrädriges Sattelfahrzeug (100) mit einem Totwinkel-Erkennungssystem (200) nach Anspruch 7, wobei der vorbestimmte Bereich L1 im Bereich von 0 bis 7 Metern liegt.

9. Zwei-, drei- oder vierrädriges Sattelfahrzeug (100) mit einem Totwinkel-Erkennungssystem (200) nach Anspruch 1, wobei der hintere Totwinkel-Sensor (201e) einen Sichtkegel (E) aufweist und wobei der Sichtkegel (E) mit einem Erfassungsbereich in einem vorbestimmten Bereich L2 in Bezug auf eine Position des hinteren Totwinkel-Sensors (201e) eingerichtet ist.

10. Zwei-, drei- oder vierrädriges Sattelfahrzeug (100) mit einem Totwinkel-Erkennungssystem (200) nach Anspruch 9, wobei der vorbestimmte Bereich L2 im Bereich von 0 bis 70 Metern liegt.

11. Zwei-, drei- oder vierrädriges Sattelfahrzeug (100) mit einem Totwinkel-Erkennungssystem (200) nach Anspruch 1, wobei der linke Totwinkel-Sensor 1 (201a), der linke Totwinkel-Sensor 2 (201b), der rechte Totwinkel-Sensor 1 (201c) und der rechte Totwinkel-Sensor 2 (201d) Ultraschall-Sensoren sind.

12. Zwei-, drei- oder vierrädriges Sattelfahrzeug (100) mit einem Totwinkel-Erkennungssystem (200) nach Anspruch 1, wobei der hintere Totwinkel-Sensor (201e) ein Radar-Sensor ist.

13. Verfahren zum Erkennung eines sich im toten Winkelbereich (205, 206, 207) nähernden Hindernisses durch ein Totwinkel-Erkennungssystem (200) eines zwei-, drei- oder vierrädrigen Sattelfahrzeugs (100) gemäß einem der Ansprüche 1 bis 12, wobei das Verfahren die Schritte umfasst zum:
Starten des Fahrzeugs (100) (S401);
Senden von Rohsignalen an eine Steuerung (202) von zumindest einem von dem linken Totwinkel-Sensoren 1 und 2 (201a, 201b), zumindest einem von den rechten Totwinkel-Sensoren 1 und 2 (201c, 201d) und einem hinteren Totwinkel-Sensor (201e) (S402);
Analysieren der empfangenen Rohsignale durch die Steuerung (202) (S403);
Entscheiden, ob ein sich näherndes Fahrzeug (100) ein Hindernis darstellt (S404), und Überprüfen des Status der linken Totwinkel-Sensoren 1 und 2 (201a, 201b), rechten Totwinkel-Sensoren 1 und 2 (201c, 201d) und des hinteren Totwinkel-Sensors (201e);
Erkennen des Hindernisses durch die linken Totwinkel-Sensoren 1 und 2 (201a, 201b) (S405);
Übermitteln der Warnung an den Fahrer über eine linke Warnanzeige oder Kollisionseinheit (203a) (S406), wenn das Hindernis von den linken Totwinkel-Sensoren 1 und 2 (201a, 201b) erkannt wird;
Erkennen des Hindernisses durch die rechten Totwinkel-Sensoren 1 und 2 (201c, 201d) (S412);
Übermitteln einer Warnung an den Fahrer über die rechte Warnanzeige oder Kollisionseinheit (203b) (S413), wenn das Hindernis von den rechten Totwinkel-Sensoren 1 und 2 (201c, 201d) erkannt wird;
Erkennen des Hindernisses durch die hinteren Totwinkel-Sensoren 1 und 2 (201e) (S407);
Analysieren, ob sich das Hindernis von der Rückseite des Fahrzeugs (100) her der linken Seite des Fahrzeugs (100) nähert (S408);
Übermitteln einer Warnung an den Fahrer über die linke Warnanzeige oder Kollisionseinheit (203a) (S409);
Analysieren, ob sich das Hindernis von der Rückseite des Fahrzeugs (100) her der rechten Seite des Fahrzeugs (100) nähert (S410); und
Übermitteln einer Warnung an den Fahrer über die rechte Warnanzeige oder Kollisionseinheit (203b) (S411).

14. Verfahren für das zwei-, drei- oder vierrädrige sattelartige Fahrzeug (100) nach Anspruch 13, wobei das Hindernis, wenn es von einem der linken Totwinkel-Sensoren 1 und 2 (201a, 201b) und den rechten Totwinkel-Sensoren 1 und 2 (201c, 201d) und dem hinteren Totwinkel-Sensor (201e) erkannt wird, dann die Leuchtintensität der Warnanzeige oder Kollisionseinheit (203, 203a, 203b) erhöht wird, zum Anzeigen eines höheren Risikos für den Fahrer des Fahrzeugs (100).

15. Verfahren für das zwei-, drei- oder vierrädrige sattelartige Fahrzeug (100) nach Anspruch 13, wobei das Hindernis, wenn es von den linken Totwinkel-Sensoren 1 und 2 (201a, 201b) und den rechten Totwinkel-Sensoren 1 und 2 (201c, 201d) erkannt wird, dann die linke Warnanzeige oder Kollisionseinheit (203a) und die rechte Warnanzeige oder Kollisionseinheit (203b) aufleuchten, zum Anzeigen eines Vorhandensein des Hindernisses auf beiden Seiten für den Fahrer des Fahrzeugs (100).

## Revendications

1. Véhicule de type selle à deux, trois ou quatre roues (100) équipé d'un système de détection d'angle mort (200), ledit système de détection d'angle mort (200) comprenant :
une unité de capteurs (201), un contrôleur (202) et une unité d'alerte (203) ;
ladite unité de capteurs (201) comprenant un capteur d'angle mort gauche (201a), un capteur d'angle mort droit 1 (201c) et un capteur d'angle mort arrière (201e) ;
ledit capteur d'angle mort gauche 1 (201a) étant situé d'un côté dudit véhicule (100) par rapport à un axe longitudinal du plan médian (XX') dudit véhicule (100) et ledit capteur d'angle mort droit 1 (201c) étant situé de l'autre côté dudit véhicule (100) par rapport audit axe longitudinal du plan médian (XX') dudit véhicule (100), et ledit capteur d'angle mort gauche 1 (201a) et ledit capteur d'angle mort droit 1 (201c) étant situés pour détecter des objets dans les zones d'angle mort (205, 207) dudit véhicule (100) ; et
ledit capteur d'angle mort arrière (201e) étant situé à l'arrière dudit véhicule (100) pour détecter des objets dans les zones d'angle mort (206) situées à l'arrière dudit véhicule (100) ;
ladite unité de capteurs (201) comprenant le capteur d'angle mort gauche 1 (201a) et un capteur d'angle mort gauche 2 (201b), ainsi que le capteur d'angle mort droit 1 (201c) et un capteur d'angle mort droit 2 (201d),
ledit véhicule (100) comprenant un réservoir de carburant (103) et une selle arrière (134), **caractérisé en ce que**
ledit capteur d'angle mort gauche 1 (201a) est situé sur le côté gauche dudit réservoir de carburant (103) par rapport audit axe du plan médian longitudinal (XX') dudit véhicule (100) ; et
ledit capteur d'angle mort gauche 2 (201b) est situé sous ladite selle arrière (134) dudit véhicule (100) par rapport audit axe longitudinal du plan médian (XX') dudit véhicule (100).

2. Véhicule de type selle à deux, trois ou quatre roues (100) équipé d'un système de détection d'angle mort (200) selon la revendication 1, dans lequel ledit capteur d'angle mort droit 1 (201c) est situé sur le côté droit dudit réservoir de carburant (103) dudit véhicule (100) par rapport audit axe longitudinal du plan médian (XX') dudit véhicule (100).

3. Véhicule de type selle à deux, trois ou quatre roues (100) équipé d'un système de détection d'angle mort (200) selon la revendication 1, dans lequel ledit capteur d'angle mort droit 2 (201d) est situé sur le côté droit en dessous dudit siège passager arrière (134) dudit véhicule (100) par rapport audit axe du plan médian longitudinal (XX') dudit véhicule (100).

4. Véhicule de type selle à deux, trois ou quatre roues (100) équipé d'un système de détection d'angle mort (200) selon la revendication 1, dans lequel ladite unité de capteur (201) est connectée électriquement audit contrôleur (202) et ledit contrôleur (202) est connecté électriquement à ladite unité d'indication d'alerte (203).

5. Véhicule de type selle à deux, trois ou quatre roues (100) équipé d'un système de détection d'angle mort (200) selon la revendication 4, dans lequel ladite unité d'alerte (203) est une unité d'alerte sonore ou visuelle destinée à avertir le conducteur dudit véhicule (100).

6. Véhicule de type selle à deux, trois ou quatre roues (100) équipé d'un système de détection d'angle mort (200) selon la revendication 1, dans lequel ledit système de détection d'angle mort comprend un commutateur disposé dans une zone accessible permettant au conducteur d'accéder auxdits capteurs d'angle mort gauche 1 et 2 (201a, 201b) et auxdits capteurs d'angle mort droit 1 et 2 (201c, 201d) dans ledit véhicule (100).

7. Véhicule de type selle à deux, trois ou quatre roues (100) avec un système de détection d'angle mort (200) selon la revendication 1, dans lequel ledit capteur d'angle mort gauche 1 (201a), ledit capteur d'angle mort gauche 2 (201b), ledit capteur d'angle mort droit 1 (201c) et ledit capteur d'angle mort droit 2 (201d) sont configurés pour former une pluralité de cônes de vision (A, B, C et D), et dans lequel lesdits cônes de vision (A, B, C et D) comprennent une zone de détection dans une plage prédéterminée de L1 par rapport à un emplacement dudit capteur d'angle mort gauche 1 (201a), dudit capteur d'angle mort gauche 2 (201b), dudit capteur d'angle mort droit 1 (201c) et dudit capteur d'angle mort droit 2 (201d).

8. Véhicule de type selle à deux, trois ou quatre roues (100) équipé d'un système de détection d'angle mort (200) selon la revendication 7, dans lequel ladite plage prédéterminée L1 est comprise entre 0 mètre et 7 mètres.

9. Véhicule de type selle à deux, trois ou quatre roues (100) équipé d'un système de détection d'angle mort (200) selon la revendication 1, dans lequel ledit capteur d'angle mort arrière (201e) comprend un cône de vision (E), et dans lequel ledit cône de vision (E) est configuré avec une zone de détection dans une plage prédéterminée L2 par rapport à l'emplacement dudit capteur d'angle mort arrière (201e).

10. Véhicule de type selle à deux, trois ou quatre roues (100) équipé d'un système de détection d'angle mort (200) selon la revendication 9, dans lequel ladite plage prédéterminée L2 est comprise entre 0 mètre et 70 mètres.

11. Véhicule de type selle à deux, trois ou quatre roues (100) équipé d'un système de détection d'angle mort (200) selon la revendication 1, dans lequel ledit capteur d'angle mort gauche 1 (201a), ledit capteur d'angle mort gauche 2 (201b), ledit capteur d'angle mort droit 1 (201c) et ledit capteur d'angle mort droit 2 (201d) sont des capteurs à ultrasons.

12. Véhicule de type selle à deux, trois ou quatre roues (100) équipé d'un système de détection d'angle mort (200) selon la revendication 1, dans lequel ledit capteur d'angle mort arrière (201e) est un capteur radar.

13. Procédé de détection d'un obstacle s'approchant dans la zone d'angle mort (205, 206, 207) par un système de détection d'angle mort (200) d'un véhicule de type selle à deux, trois ou quatre roues (100) selon l'une quelconque des revendications 1 à 12, ledit procédé comprenant les étapes de :
démarrer ledit véhicule (100) (S401) ;
envoyer des signaux bruts à un contrôleur (202) à partir d'au moins l'un des capteurs d'angle mort gauche 1 et 2 (201a, 201b), d'au moins l'un des capteurs d'angle mort droit 1 et 2 (201c, 201d) et d'un capteur d'angle mort arrière (201e) (S402) ;
analyser les signaux bruts reçus par ledit contrôleur (202) (S403) ;
déterminer si un véhicule en approche (100) constitue un obstacle (S404) et vérifier l'état desdits capteurs d'angle mort gauche 1 et 2 (201a, 201b), desdits capteurs d'angle mort droit 1 et 2 (201c, 201d) et dudit capteur d'angle mort arrière (201e) ;
détecter ledit obstacle à l'aide desdits capteurs d'angle mort gauche 1 et 2 (201a, 201b) (S405) ;
communiquer l'alerte audit conducteur par l'intermédiaire d'un indicateur d'alerte gauche ou module de collision (203a) (S406), lorsque ledit obstacle est détecté par lesdits capteurs d'angle mort gauche 1 et 2 (201a, 201b) ;
détecter ledit obstacle à l'aide desdits capteurs d'angle mort droit 1 et 2 (201c, 201d) (S412) ;
communiquer une alerte au conducteur par l'intermédiaire dudit indicateur d'alerte droit ou module de collision (203b) (S413), lorsque ledit obstacle est détecté par lesdits capteurs d'angle mort droit 1 et 2 (201c, 201d) ;
détecter ledit obstacle à l'aide desdits capteurs d'angle mort arrière 1 et 2 (201e) (S407) ;
déterminer si ledit obstacle s'approche du côté gauche dudit véhicule (100) depuis l'arrière dudit véhicule (100) (S408) ;
communiquer une alerte audit conducteur par l'intermédiaire dudit indicateur d'alerte gauche ou module de collision (203a) (S409) ;
analyser si ledit obstacle s'approche du côté droit dudit véhicule (100) depuis ledit arrière dudit véhicule (100) (S410) ; et
communiquer une alerte audit conducteur par l'intermédiaire dudit indicateur d'alerte droit ou module de collision (203b) (S411).

14. Procédé pour ledit véhicule de type selle à deux, trois ou quatre roues (100) selon la revendication 13, dans lequel ledit obstacle, lorsqu'il est détecté par l'un desdits capteurs d'angle mort gauche 1 et 2 (201a, 201b) et desdits capteurs d'angle mort droit 1 et 2 (201c, 201d) et par ledit capteur d'angle mort arrière (201e), l'intensité lumineuse dudit indicateur d'alerte ou module de collision (203, 203a, 203b) augmente pour indiquer un risque accru pour ledit conducteur dudit véhicule (100).

15. Procédé pour ledit véhicule de type selle à deux, trois ou quatre roues (100) selon la revendication 13, dans lequel, lorsque ledit obstacle est détecté par lesdits capteurs d'angle mort gauche 1 et 2 (201a, 201b) et lesdits capteurs d'angle mort droit 1 et 2 (201c, 201d), ledit indicateur d'alerte gauche ou module de collision (203a) et ledit indicateur d'alerte droit ou module de collision (203b) s'allument pour indiquer la présence dudit obstacle des deux côtés au conducteur dudit véhicule (100).
